# EUROPEAN PATENT APPLICATION

(11) **EP 4 636 874 A1**
(43) Date of publication of application: **22.10.2025**
(21) Application number: 24170938.5
(22) Date of filing: 18.04.2024
(51) Int. Cl.: H01M 10/04, H01M 10/613, H01M 10/625, H01M 10/647, H01M 10/6556, H01M 50/209, H01M 50/224, H01M 50/249, H01M 50/271, H01M 50/30

(54) **BATTERY UNIT AND METHOD OF MANUFACTURING THE SAME**

(71) Applicant: Samsung SDI Co., Ltd., Yongin-si, Gyeonggi-do 17084 (KR)
(72) Inventor: Bloder, Martin, 8261 Sinabelkirchen (AT)
(74) Representative: Gulde & Partner

(57) **Abstract**

The present disclosure refers to a battery unit (100). The battery unit (100) includes a frame (20) with a bottom member (21) and a plurality of side walls (22, 23, 24, 25), wherein the bottom member (21) and the plurality of side walls (22, 23, 24, 25) form an interior accommodation space (26) in which a plurality of battery cells (10) is accommodated. The top cover member (30) is fixed to the frame (20). The top cover member (30) includes a first metal sheet (31) on an inner side of the top cover member (30) and a second metal sheet (32) on an outer side of the top cover member (30) which are roll-bonded to each other. The top cover member (30) further includes at least one cooling channel (40) between bonding areas (33) where the first metal sheet (31) and the second metal sheet (32) are roll-bonded.

## Description

### Field of the Disclosure

The present disclosure relates to a battery unit and a method of manufacturing the battery unit. In addition, the present disclosure relates to a battery system including the battery unit and a vehicle including the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

Upper parts of the battery cells are regularly subject to overheating where for example, the electrode terminals, busbar connections or wirings are located. Current battery modules and manufacturing methods often entirely avoid cell top covers for busbar cooling or for battery cell cooling. Other known methods provide incorporated cooler top that is manufactured to the final dimensions prior to the fixation to a module frame.

Battery modules according to the state of the art without any top cooling cover cannot provide fast charging due to heat development and low thermal propagation characteristics can be achieved. Furthermore, battery modules that use a more or less open busbar architecture are also prone to arcing and thermal propagation due to the electrically conductive deposits from battery cells in thermal runaway.

Battery modules according to the state of the art that use fully pre-manufactured top cooler covers struggle with inevitably varying heights of the individual cells and the surrounding frame. Such height variations may lead to uneven pressure and non-uniform cooling of the battery cells. This in turn reduces the overall performance and lifetime of the battery module or the system which uses the battery modules.

### Summary of Invention

The invention is defined by the appended claims.

The description that follows is subjected to this limitation. Any disclosure lying outside the scope of said claims is only intended for illustrative as well as comparative purposes.

According to one aspect of the present disclosure, a battery unit is provided. The battery unit includes a plurality of battery cells. The battery unit includes a frame with a bottom member and a plurality of side walls, wherein the bottom member and the plurality of side walls form an interior accommodation space in which the plurality of battery cells is accommodated. A top cover member is fixed to the frame. The top cover member includes a first metal sheet on an inner side of the top cover member and a second metal sheet on an outer side of the top cover member which are roll-bonded to each other. The top cover member further includes at least one cooling channel between bonding areas where the first metal sheet and the second metal sheet are roll-bonded.

According to another aspect of the present disclosure, a method of manufacturing a battery unit is provided. The method includes the step of a) providing a frame which includes a bottom member and a plurality of side walls, wherein the bottom member and the plurality of side walls form an interior accommodation space in which a plurality of battery cells is accommodated. The method further includes the step b) a top cover member with the frame, wherein the top cover member includes a first metal sheet on an inner side of the top cover member and a second metal sheet on an outer side of the top cover member which are roll-bonded to each other. The method further includes the step c) of inflating, after the fixing of the top cover member to the frame, the top cover member to elastically press the first metal sheet against the plurality of battery cells for forming the at least one cooling channel between bonding areas where the first metal sheet and the second metal sheet are roll bonded.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery module in affixed state before inflating according to an embodiment,
- Fig. 2: illustrates a schematic side view of the battery module the fixed state before inflating according to an embodiment,
- Fig. 3: illustrates a schematic perspective view of a battery module after inflating according to an embodiment,
- Fig. 4: illustrates a schematic side view of the battery module after inflating according to an embodiment, and
- Fig. 5: schematically illustrates a method of manufacturing according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery unit is provided. The battery unit, for example a battery module or a battery pack, includes a plurality of battery cells. The battery unit includes a frame with a bottom member and a plurality of side walls. The bottom member and the plurality of side walls form an interior accommodation space in which the plurality of battery cells, and their electrical connections, are is inserted/accommodated. A top cover member is fixed to an upper portion of the frame or housing. The top cover member includes a first metal sheet on an inner side of the top cover member and a second metal sheet on an outer side of the top cover member. The first metal sheet and the second metal sheet are roll-bonded to each other. The top cover member further includes at least one cooling channel between bonding areas where the first metal sheet and the second metal sheet are roll bonded. The top cover member is configured to elastically press the first metal sheet against the plurality of battery cells by inflating the top cover member for forming the at least one cooling channel in the fixed state.

The side walls together with the bottom member provide a frame which is in other words a case or casing. The roll bonding refers to particular form of connecting or bonding metal sheets with each other. In practice, two metal sheets are passed through a pair of flat rollers exposed to sufficient pressure to bond the metal sheets. The pressure is set high enough to deform the metals and reduce the combined thickness. The formation of the cooling channels by inflating may be provided by coating (with release agent or separation agent) a desired cooling channel layout on one among the metal sheets according to the desired cooling cannels to be formed. Then, only the bare or uncoated metal surfaces bond in the roll bonding process. These areas refer to the bonding areas. Then, the un-bonded parts corresponding to the cooling channel layout are inflated, for example, through pressure. For the inflating, for example, a pressure generating device like a pump, a compressor or other sources that can cause high fluid pressure may be connected to an end, e.g. a port, of the to-be inflated cooling channel, i.e. the unbonded areas, so that a fluid pressure, for example for air or coolant, causes inflation to form the at least one cooling channel. A limitation of the inflation can be achieved by the battery cells in a state where the battery cells are installed so that the inflation of the respective channel adapts and thus compensates the tolerances of the battery cells. In alternative or in addition, to reach a determined shape for the at least one cooling channel, a contour defining member may be provided which limits extension for the inflation and provides a defined shape. In order to connect the to-be-inflated cooling channel to the pressurized medium, a welded, soldered or otherwise very well-connected connection to the respective channel may be an advantage. For to improve the connections, a hose sleeve or a pipe may be directly welded to the channel that is to be inflated. The metals of the first metal sheet and the second metal sheet may be the same metal or different metal. The roll bonding thus allows to integrate cooling channels directly in the top cover member. On the inner side may mean the side directed to the accommodation space or the battery cells. On the outer side may mean the side directed away from the accommodation space or the battery cells. A top cover member may also be referred to as top cover According to an embodiment, the battery unit is a battery module. In other examples, the battery unit is a battery pack.

The battery unit is structurally improved since over the entire battery cells an improved heat transfer performance can be achieved. This is the result of performing the inflating after the top cover member is fixated to the frame production such that height tolerances of the battery cells can be compensated as well as achieving a uniform mechanical pressure and therefore superior thermal conductivity. In detail, each of the battery cells despite of having different heights has a press contact with the top cover member since the inflation balances such height differences. Therefore, a self-setting of the thermal contact is achieved since the cooling channels of the top cover member in the inflation are automatically adapting to the varying heights of the individual cells and busbars. Thus, a structurally improved battery unit with improved heat transfer over the plurality of battery cells is provided due to reduced thermal distance.

According to an embodiment, the top cover member includes a straight portion on the outer side formed by inflating the top cover member to elastically press the first metal sheet against the battery cells for the forming of the at least one cooling channel, wherein the top cover member in the fixed state prior to the inflating includes a cross section profile with an arched portion at least in a central region that is arched towards the plurality of battery cells. By pre-forming the top cover member including the curved down arc the in the fixed state prior to inflating which is then straightened due to contact of the first metal sheet with the battery cell in the inflation an improved, a good mechanical pressure against the battery cell can be achieved as result of the initially arched shape. The use of the arched portion ensures good mechanical pressure over the lifetime.

According to an embodiment, the top cover member includes another straight portion in a peripheral region on the outer side formed by inflating the top cover member to elastically press the first metal sheet against the battery cells for the forming of the at least one cooling channel, wherein the top cover member in the fixed state prior to the inflating includes a cross section profile comprising an inclined portion in a peripheral region. By pre-forming the top cover member including the inclined portion and/or together with the arched portion in the state prior to inflating of the top cover member that is made straight in due to lifting in the inflation process, a superior mechanical and thermal connection can be achieved.

According to an embodiment, the at least one cooling channel is formed to overlap with electrode terminals of the plurality of battery cells and the top cover member is configured to elastically press the first metal sheet against the electrode terminals of the plurality of battery cells by the inflating of the top cover member to form the at least one cooling channel. Thus, cooling channels are pressed directly onto the electrode terminals, where wirings and busbars may be connected. Thus, heat transfer performance is increased by selectively locating and pressing the channel onto the electrode terminals to reduce the thermal distance.

According to an embodiment, a cell vent cover is provided which is disposed between the top cover member and the plurality of battery cells. The cell vent cover may span the entirely of battery cells and the vent openings of the battery cells. Alternatively, individual cell vent covers are provided to cover each vent openings of the battery cells. The cell vent cover may correspond to a cell vent or cell safety vent provided in the battery cell. The cell vent may be a cell vent valve. The cell vent cover allows to release hot gases from the battery cells through the cell vents to prevent high pressure in the battery cell and further protects neighboring battery cells.

According to an embodiment, the at least one cooling channel is formed to overlap with the cell vent cover and the top cover member is configured to elastically press the first metal sheet against at least a portion of the cell vent cover to fix the cell vent cover by the inflating of the top cover member to form the at least one cooling channel. Thus, the cooling channels are made to press onto, and thereby fix, the cell vent cover. This also further improves the thermal propagation performance. In addition, the cooling channels and the press contacts of the first metal sheets caused by inflation are located so to fixate the cell vent cover which reduces the amount of assembly requirements and fixation.

According to an embodiment, the top cover member is configured to elastically press the first metal sheet against an edge portion of the cell vent cover. Thus, the fixation of the cell vent cover is improved while the venting capability in a centre of the cell vent cover is maintained. This also improves thermal propagation performance.

According to an embodiment, the electrode terminals and the cell vent cover are spatially separated from each other by the at least one cooling channel. Since the at least one cooling channel presses on the battery cell, it can be used as a sealing that prevents hot gases to enter the electrode terminal area. Thus, thermal performance is improved while sealing the electrode terminal region from the venting region.

According to an embodiment, the top cover member includes a cross section profile with stepped portions between a central region and a peripheral regions, the central portion being inwardly displaced with respect to the peripheral regions. Inwardly displaced may mean to be displaced in direction of the battery cells or the bottom member. This pre-configuration of the top cover member including the stepped portion takes into account the height difference between the peripheral region where the electrode terminals, busbars and/or wirings are located and the central region. Thus, the stepped portion assists reducing the amount of inflating needed in the center region to establish the press contact with the battery cells to provide the thermal conductivity. Thus, the distance of the top cover member to the battery cells due to the pre-formed stepped portion is reduced and made more homogenous as the contour of the top cover member including the stepped portion resembles the contour of the battery cell.

According to an embodiment, the top cover member includes a plurality of vent openings arranged to align with respective cell vents of the plurality of battery cells. The cell vents may be covered by the cell venting cover. Thus, the top cover member also incorporates openings for the underlying cell vents in the battery cells. This enables the escape of hot gases in the case of one cell going into thermal runaway.

According to an embodiment, two opposite side walls of the frame include coupling edges with a coupling groove that is open toward the bottom portion and the cover member includes cover coupling edges which embrace the frame coupling edges, wherein cover coupling protrusions at ends of the cover coupling edges are received in the coupling groove. This coupling is advantageous as it is pre-adapted to the upper cell stacks contour and allowing the inflation process to establish the desired contacts. For example, a snap-fit or a form-fit can be realized with the above fixation.

According to an embodiment, the top cover member is coupled to the frame by at least one of bolting, riveting, a snap-fit connection or a force-fit connection. Thus, conventional connections can be adopted together with the press contact caused by inflation after the fixing.

According to another aspect of the present disclosure, a method of manufacturing a battery unit. The method includes the step of a) providing a frame which includes a bottom member and a plurality of side walls, wherein the bottom member and the plurality of side walls form an interior accommodation space in which a plurality of battery cells, and their electrical connections, is accommodated. The method further includes the step b) a top cover member with the frame, wherein the top cover member includes a first metal sheet on an inner side of the top cover member and a second metal sheet on an outer side of the top cover member which are roll-bonded to each other. The method further includes the step of inflating the top cover member in the fixed state to form least one cooling channel between bonding areas where the first metal sheet and the second metal sheet are roll-bonded and to elastically press the first metal sheet against the plurality of battery cells.

The method ensures that the battery unit has improved heat transfer performance which is achieved by performing the inflating after the top cover member is fixated to the frame. Thus, height tolerances of the battery cells can be compensated, uniform mechanical pressure and therefore superior thermal conductivity is achieved. A self-setting of the thermal contact is achieved since the cooling channels of the top cooler in the inflation are automatically adapting to the varying heights of the individual cells and busbars. Thus, a structurally improved battery unit with improved heat transfer performance over the plurality of battery cells is provided.

According to an embodiment, the top cover member fixed with the frame includes a cross section profile including an arched portion at least in a central region that is arched towards the plurality of battery cells in a state prior to inflating. The method includes the step of inflating includes to straighten the arched portion of the second metal sheet to a straight portion by elastically pressing the first metal sheet against the battery cells to form the at least one cooling channel in the fixed state. By pre-forming the top cover member including the curved down arc in the state prior to inflating of the top cover member that is made straight a superior mechanical and thermal connection is ensured. The use of the arched portion ensures good mechanical pressure over the lifetime. Expansion barriers may be used to provide equal height on the outer side.

According to another aspect of the disclosure, a battery system including the battery unit is provided. The above mentioned advantages also apply to the battery system.

According to another aspect of the disclosure, a vehicle including the battery system is provided.

According to an embodiment, the first metal sheet has a first thickness less than a second thickness of the second metal sheet. For example but not restricted thereto, the first thickness may be between 0,5 - 2 mm. For example but not restricted thereto, the second thickness may be between 3 - 5 mm. Thus, the second metal sheet may provide structural integrity to the top cover member by thickness while the first thinner metal sheet may be suitable for the cooling channel generation by inflation due to the reduced thickness.

According to an embodiment, the first metal sheet and the second metal sheet include different metals and/or different metal alloys. Thus, the inner side of the top cover member and the outer side of the top cover member can be separately designed according to a required functionality needed. For example, the inner side may need to have higher heat conductivity as it is closer to the heat generating battery cells while the outer side of the top cover member may require more structural robustness to prevent deformation. Thus, the roll bonding can be used to tailor the top cover member for the specific technical needs.

According to an embodiment, the first metal sheet includes aluminum or an aluminum alloy and the second metal sheet includes a steel or a metal matrix composite. Steel can be produced on large scale and is thus better for large scale production of battery units. The metal matrix composite may include fibers or particles dispersed in the metallic matrix.

According to an embodiment, the first metal sheet has a thermal conductivity higher than the thermal conductivity of the second metal sheet. Thus, the inner first metal sheet may act as heat conductor that transports heat away while proving as well the cooling channels.

According to an embodiment, additive particles are used in the roll-bonding. Thus, bonding may be strengthened to reinforce the frame while reducing the risk of delamination. For example, metallic particles or ceramic particles may be added during the roll bonding.

The additional features as mentioned in the context of describing embodiments with respect to the battery module can be combined with the above-described method resulting in the same advantageous effects as described above.

### Specific Embodiments

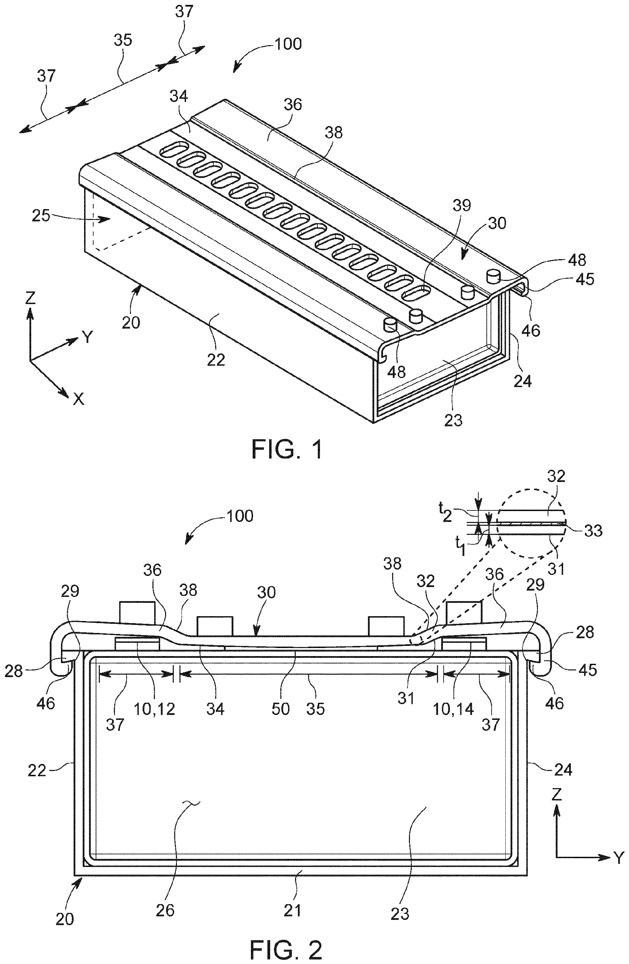

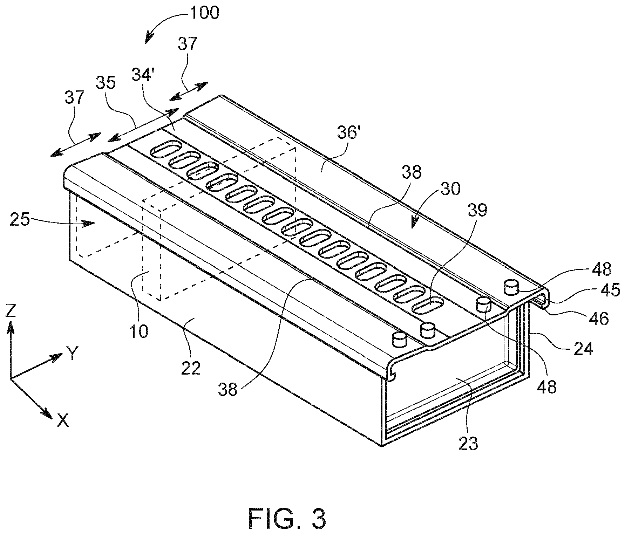

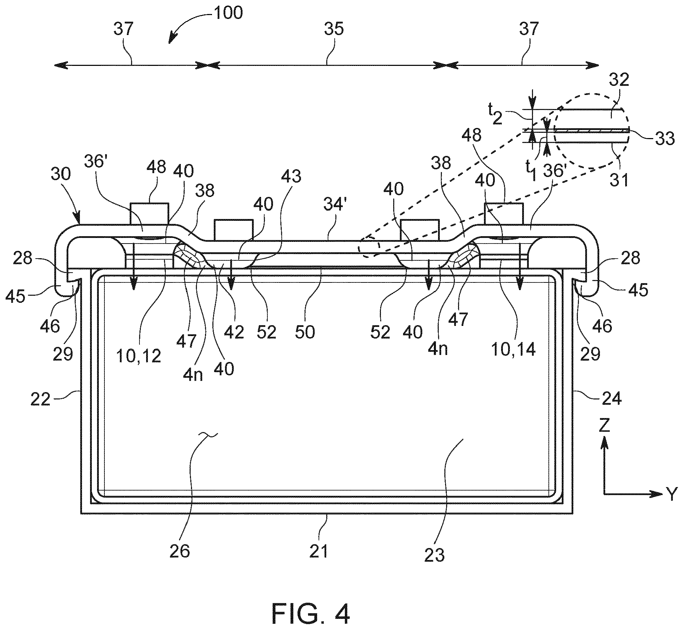

Figs. 1 to 4 show a battery unit 100, here a battery module 100, according to various embodiments of the invention. Figs. 1 and 2 show a schematic perspective view and a side view, here in x-direction of Fig. 1 or -x of a battery module 100 in a fixed state prior to inflation. Figs. 3 and 4 show a schematic perspective view and a cross section according to view direction A of a battery module 100 in a final state after the inflation. In the following, the battery module 100 will be described with reference to the various Figs. 1 to 4. Even though a battery module 100 is described in the following, the invention is also applicable to battery packs.

Referring to Figs. 1 to 4, the battery module 100 includes a plurality of battery cells 10. The battery cells 10 may each include a first electrode terminal 12 and a second electrode terminal 14 with opposite polarity. The electrode terminals 12, 14 are shown in Figs. 2 and 4 in the side view, here in x-direction, and one among the plurality of battery cells 10 for illustration is indicated schematically in Fig. 3. Further, the battery cells 10 may be interconnected (not shown) with each other and busbars may be connected with the battery cells 10. The plurality of battery cells 10 may be provided as a battery cell stack. The battery cells 10 may be prismatic but also different-shaped battery cells 10 may be positioned with respect to each other in a suitable manner.

The battery module 100 further includes a frame 20. The frame 20 surrounds and supports the plurality of battery cells 10 of the battery module 100. The frame 20 includes a bottom member 21 and a plurality of side walls 22, 23, 24, 25 as indicated in the respective Figs. 1 to 4. The bottom member 21 and the plurality of side walls 22, 23, 24, 25 form an interior accommodation space 26 in which the plurality of battery cells 10, and their electrical connections, is accommodated. The accommodation space 26 is only schematically indicated in Figs. 2 and Fig. 4.

Referring to Figs. 1 to 4, the battery module 100 includes a top cover member 30. The top cover member 30 is fixed to the frame 20. The cover member 30 may be fixed to an upper portion of the frame 20, for example, as shown in Figs. 2 and 4. The cover member 30 is thus positioned above the plurality of battery cells 10. The top cover member 30 has a cooling function integrated in the top cover member 30 which effectively enables to cool the battery cells 10 from a top side (or terminal side) of the battery cell 10.

The top cover member 30 includes a first metal sheet 31 on an inner side of the top cover member 30. The inner side refers to the side that is directed to the interior of the accommodation space 26. Further, the top cover member 30 includes a second metal sheet 32 on an outer side of the top cover member 30. The outer side is opposite to the inner side. The first metal sheet 31 and the second metal sheet 32 are roll-bonded to each other to form the top cover member 30. The first and second metal sheets 31, 32 are exemplarily illustrated in the enlarged inset of Figs. 2 and 4.

Referring to Figs. 3 and 4, the top cover member 30 includes at least one cooling channel 40. In the present example, two separate cooling channels 40 are provided but the invention is not restricted thereto. For example, a single continuous cooling channel 40 may be provided or multiple separate cooling channels 40. A connecting portion 47 is exemplarily indicated in Fig. 4 connecting two straight portions of a cooling channel 40. Further, cooling channel ports 48 are indicated on the outer side of the top cover member 30 from which coolant can be drained from the cooling channels 40 or supplied thereto.

The cooling channels 40 are disposed between bonding areas 33 where the first metal sheet 31 and the second metal sheet 32 are roll bonded to each other. An example of a bonding area 33 is illustrated in the enlarged inset in Figs. 2 and 4. The bonding areas 33 refer to the bonded interface between the two roll-bonded metal sheets 31, 32.

The at least one cooling channel 40 is formed by inflating the top cover member 30 in the fixed state. In the fixed state prior to the inflating as illustrated in Figs. 1 and 2, the top cover member 30 is suitably preformed or prepared to provide the designated cooling channels 40 and to provide a uniform contact pressure on the plurality of battery cells 10. The top cover member 30 include a coated cooling channel layout at which unbonded areas are provided.

Due to the inflation of the unbonded areas, e.g. by applying a pressure to the unbonded areas, between bonded areas 33 where the first metal sheet 31 and the second metal sheets 32 are roll-bonded, the first metal sheet 31 of the top cover member 30 elastically deforms and presses against the plurality of battery cells 10 while forming the at least one cooling channel 40 as indicated in Fig. 4.

Thus, the at least one cooling channel 40 is formed by inflating while at the same time the cooling channel 40, or more concrete the first metal sheet 31, exerts a press force onto the plurality of battery cells 10. Thus, as indicated in Fig. 4 by several arrows, the first metal sheet 31 presses on the battery cells 10 from a top direction.

Since the inflating is performed after the top cover member 30 is fixated to the frame 20 as explained above, production height tolerances of the battery cells 10 are compensated and a uniform mechanical pressure can be achieved. Thus, each of the battery cells 10 despite of having different heights has a reliable press contact with the top cover member 30 since the inflation can compensate such height differences. Therefore, a self-setting of the thermal contact is achieved since the cooling channels 40 are automatically adapting to the varying heights of the individual cells and busbars to improve cooling performance from the top side direction.

Further, referring to Figs. 3 and 4, the top cover member 30 includes a straight portion 34' on the outer side. The straight portion 34' is formed by inflating the pre-formed top cover member 30 to elastically press the first metal sheet 31 against the battery cells 10 for the forming of the at least one cooling channel 40. That is, when viewing Fig. 2, the top cover member 30 in the fixed state prior to the inflating includes a cross section profile with an arched portion 34. The arched portion 34 is located at least in a central region 35 and is arched towards the plurality of battery cells 10. Thus, due to the arc-shape used before inflating, the contact ensures good mechanical pressure caused by the arc shape over a lifetime and thus improved thermal conductance is achieved in the final state after inflating.

In more detail, when referring to Fig. 4, the arched portion 34 after inflation of the top cover member 30 is straightened due to lifting of the second metal sheet 32 once the first metal sheet 31 contacts the battery cell 10 while inflating is performed. An expansion barrier may be used to provide equal height. For example, as shown in Fig. 4, the straight portion 34' extends parallel to the bottom member 21. The straightening is caused by elastically pressing the first metal sheet 31, that is deformed due to inflation in direction of the battery cells 10, against the battery cells 10 to form the at least one cooling channel 40 which then leads to a lifting of the second metal sheet 32 and compensates the initial arch. The inflating is performed in the fixed state, i.e., the fixed state as shown in Figs. 1 and 2. In an embodiment, the arched portion 34 may be formed for the entire profile or cross section of the top cover member 30.

The top cover member 30 may further include another straight portion 36' on the outer side formed by inflating the top cover member 30 to elastically press the first metal sheet 31 against the battery cells 10 for the forming of the at least one cooling channel 40. Here, the top cover member 30 in the fixed state prior to the inflating includes a cross section profile including an inclined portion 36 in a peripheral region 37 (see Fig. 2). In this case, due to the rise of the second metal sheet 32 caused by contacting of the first metal sheet 31 with the battery cells 10, the inclined portion 36 is tilted to become straight as indicated in Figs. 3 and 4. This may allow a good thermal contact in the peripheral regions 37 with the electrode terminals 12 and 14 or other electric members to improve heat performance.

The cooling channels 40 are formed to overlap with electrode terminals 12, 14 of the plurality of battery cells 10. In this case and as illustrated in Fig. 4, the top cover member 30 elastically presses the first metal sheet 31 against the electrode terminals 12, 14 of the plurality of battery cells 10 due to the inflating of the top cover member 30 for forming the cooling channel 40. As illustrated in Fig . 4, the cooling channel 40 is formed on the electrode terminals 12, 14. Thus, in response to the top cover member 30 being inflated to form the at least one cooling channel 40 in the fixed state, an improved thermal performance and cooling is achieved due to the press contact with the electrode terminals 12, 14 or wires and busbars connected thereto.

Referring to Figs. 2 and 4, a cell vent cover 50 may be disposed on the plurality of battery cells 10 between the top cover member 30 and the plurality of battery cells 10. The cell vent cover 10 may allow releasing hot gases in a designated and safe manner to prevent high pressure and may protect neighboring battery cells 10 from the hot gases in such case. The cell vent cover 50 may be a single cover that spans the entirety of the plurality of battery cells 10 but can also be individually provided for each battery cell 10. The cell vent cover 50 may surround or cover cell vents of the respective battery cells 10. For example, the cell vent (here not shown) may be centrally covered, i.e. surrounded, by the cell vent cover 50.

The at least one cooling channel 40 is formed to overlap with the cell vent cover 50. Thus, as illustrated in Fig. 4, the top cover member 30 elastically presses the first metal sheet 31 against at least a portion of the cell vent cover 50. This is achieved in the process to fix the cell vent cover 50 by the inflating of the top cover member 30 for forming the at least one cooling channel 40. Therefore, the cell vent cover 50 is fixated alone with the top cover member 30 being inflated to form the at least one cooling channel 40 in the fixed state. Thus, fixation is simplified and a good mechanical contact is reached that improves the thermal conductivity.

Referring to Fig. 4, the top cover member 30 elastically presses the first metal sheet 31 against an edge portion 52 of the cell vent cover 50. Thus, the edge portion 52 is held fixed while the venting function in a central region is maintained. Thus, no additional fixation is required and thermal propagation performance to the cooling channels 40 is enhanced.

Due to the press contact in addition, the electrode terminals 12, 14 and the cell vent cover 50 are spatially separated, i.e. spatially sealed, from each other by the at least one cooling channel 40. Thus, an additional sealing feature is implemented by the press contact of the first metal sheet 31 that prevents hot gases to enter the electrode terminal area.

In addition, the profile geometry of the top cover member 30 includes a cross section profile with stepped portions 38 between a central region 35 and peripheral regions 37. As can be seen in Figs. 1 to 4, the central region 35 of the top cover member 30 is inwardly displaced or in other words inwardly indented with respect to the two peripheral regions 37. These stepped portions 38 refer to a pre-configuration of the top cover member 30 that is adapted for the height difference between the electrode terminals 12, 14 and/or busbars with respect to the central region. Thus, the stepped portion 38 assists in reducing the amount of inflating needed in the central region 35 to establish the press contact. This is facilitated due to the pre-forming since the stepped portion 38 provides a contour of the top cover member 30 which resembles the contour of the battery cell 10.

Referring to the Figs. 1 and 3, the top cover member 30 includes a plurality of vent openings 39. The vent openings 39 may be arranged to align with respective cell vents of the plurality of battery cells 10. Thus, an escape of hot gases is provided in case of that one battery cell 10 going into thermal runaway.

A way of fixating the top cover member 30 with the frame 20 is shown in Figs. 1 to 4. The two opposite side walls 22, 24 of the frame 20 include respective frame coupling edges 28 which include a coupling groove 29 that is open in direction of the bottom member 21, i.e. to a bottom of the frame 20. The coupling groove 29 open to the bottom member 21 can couple with the top cover member 30. The top cover member 30, therefore, may include a cover coupling edge 45 which is formed to embrace the frame coupling edge 28. Cover coupling protrusions 46 at ends of the cover coupling edges 45 are received by the coupling groove 29 and extend therein in the direction along the side walls 22, 24, i.e. along the coupling groove 29. Such fixation can be used to provide a snap-fit connection. Thus, in such case, the top cover member 30 may be connected by inserting the top cover member 30 on one side wall 22 and span the top cover member 30 around the top to insert the cover coupling protrusions 46 in the coupling groove 29 on the opposite side wall 24. In this way an elasticity of the top cover member 30 may be used to reach the fixed state. Additionally, the coupling features may also allow to realize a form fit, i.e., by arresting the cover coupling protrusions 46 within the coupling groove 29. This may be produced by in-sliding. The above fixation has the advantage of a fixation for the top cover member 30 is provided in which the inflation can be easily implemented since the arresting forces are located at the edge so that the process of inflating over the battery cells 10 can be readily performed.

The disclosure is however not restricted thereto. The top cover member 30 can be coupled/connected to the frame 20 also in different manner. For example, the top cover member 30 is coupled to the frame 20 by at least one of bolting, riveting, a snap-fit, form-fit or a force-fit connection. Thus, the inventive concept is not restricted to a particular type of how the top cover member 30 is fixed to the frame 20 before the inflation operation is performed.

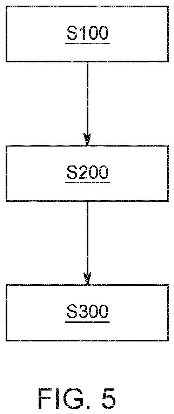

According to Fig. 5, a schematic method of manufacturing a battery unit 100 is provided. The features of the method can also be obtained from the above description of the Figs 1 to 4 and are incorporated herein by reference. The method includes the step of providing S100 a frame 20 which includes a bottom member 21 and a plurality of side walls 22, 23, 24, 25. The bottom member 21 and the plurality of side walls 22, 23, 24, 25 form an interior accommodation space 26 in which a plurality of battery cells 10, and their electrical connections, is accommodated. The frame 20 refers to the features as described above in view of Figs. 1 to 4.

The method further includes the step of fixing S200 a top cover member 30 with the frame 20, wherein the top cover member 30 includes a first metal sheet 31 on an inner side of the top cover member 30 and a second metal sheet 32 on an outer side of the top cover member 30.

The first metal sheet 31 and the second metal sheet 32 are roll-bonded to each other. These steps are illustrated for example by the Figs. 1 and 2 being in a fixed state prior to the inflation. Reference is made to the above description.

The method further includes the step of inflating S300 the top cover member 30 in the fixed state to form least one cooling channel 40 between bonding areas 33 where the first metal sheet 31 and the second metal sheet 32 are roll-bonded. Due to the inflation, the first metal sheet 31 elastically presses against the plurality of battery cells 10. Thus, a self-setting of the thermal contact is achieved since the cooling channels 40 of the top cooler in the inflation are automatically adapting to the varying heights of the individual cells and busbars resulting from the production. Therefore, an improved battery module 100 is generated with improved thermal conductance properties. For the inflating, for example, a pressure generating device like a pump, a compressor or other sources that can cause high fluid pressure may be connected to an end, e.g. a port, of the to-be inflated cooling channel, i.e. the unbonded areas, so that a fluid pressure, for example for air or coolant, causes inflation to form the at least one cooling channel 40. A limitation of the inflation can be achieved by the battery cells in a state where the battery cells 10 are installed so that the inflation of the respective channel adapts and thus compensates the tolerances of the battery cells 10. In alternative or in addition, to reach a determined shape for the at least one cooling channel 40, a contour defining member may be provided which limits extension for the inflation and provides a defined shape. In order to connect the to-be-inflated cooling channel to the pressurized medium, a welded, soldered or otherwise very well-connected connection to the respective channel may be an advantage. For to improve the connections, a hose sleeve or a pipe may be directly welded to the channel that is to be inflated.

As explained further with respect to Figs. 1 and 2, the top cover member 30 fixed with the frame 20 includes a cross section profile including an arched portion 34 at least in a central region that is arched towards the plurality of battery cells in a state prior to inflating. The method includes the step of inflating to straighten the arched portion 34 of the second metal sheet to a straight portion 34' by elastically pressing the first metal sheet 31 against the battery cells 10 to form the at least one cooling channel 40 in the fixed state. By pre-forming the top cover member including the curved down arc in the state prior to inflating of the top cover member 30 that is made straight a superior mechanical and thermal connection is ensured. The use of the arched portion ensures good mechanical pressure over the lifetime as described already above. For further method steps, it is referred to the above description which is incorporated herein by reference.

In summary, a structurally improved battery unit 100, for example battery module or battery back, is provided that achieves improved heat transfer performance over the entire battery cells 10 since the inflating is performed after the top cover member 30 is fixated to the frame 20 so that production height tolerances of the battery cells 10 are compensated and uniform mechanical pressure and therefore superior thermal conductivity is achieved. In detail, each of the battery cells 10 despite of that they may have different heights has a press contact with the top cover member 30 since the inflation balances such height differences. In other words, a self-setting of the thermal contact is achieved since the cooling channels 40 of the top cooler in the inflation are automatically adapting to the varying heights of the individual cells and busbars. Further embodiments allow for improvement of the heat transfer and venting properties of such a top cover member 30 as well as suitable fixation to realize the above effects.

### Reference signs

- 100: battery unit/module

- 10: battery cell
- 12: first electrode terminal
- 14: second electrode terminal

- 20: frame/casing
- 21: bottom member
- 22, 23: side wall
- 24, 25: side wall
- 26: accommodation space
- 28: frame coupling edge
- 29: coupling groove

- 30: top cover member
- 31: first metal sheet
- 32: second metal sheet
- 33: bonding area
- 34: arched portion
- 34': straight portion
- 35: central region
- 36: inclined portion
- 36': straight portion
- 37: peripheral region
- 38: stepped portion
- 39: vent openings

- 40: cooling channel
- 45: cover coupling edge
- 46: cover coupling protrusion
- 47: connecting portion
- 48: cooling channel port

- 50: cell vent cover
- 52: edge portion

- S100: providing the frame
- S200: fixing a top cover member
- S300: inflating the top cover member

- t1: first thickness
- t2: second thickness

## Claims

1. A battery unit (100), comprising:
a plurality of battery cells (10),
a frame (20) comprising a bottom member (21) and a plurality of side walls (22, 23, 24, 25), wherein the bottom member (21) and the plurality of side walls (22, 23, 24, 25) form an interior accommodation space (26) accommodating the plurality of battery cells (10),
a top cover member (30) fixed to the frame (20),
wherein the top cover member (30) comprises a first metal sheet (31) on an inner side of the top cover member (30) and a second metal sheet (32) on an outer side of the top cover member (30) which are roll-bonded to each other,
wherein the top cover member (30) further comprises at least one cooling channel (40) between bonding areas (33) of the first metal sheet (31) and the second metal sheet.

2. The battery unit (100) according to claim 1, wherein the battery unit (100) is a battery module (100).

3. The battery unit (100) according to any of the preceding claims 1 to 2, wherein the top cover member (30) comprises a straight portion (34') on the outer side formed by inflating the top cover member (30) to elastically press the first metal sheet (31) against the battery cells (10) for the forming of the at least one cooling channel (40), wherein the top cover member (30) in the fixed state prior to the inflating comprises a cross section profile comprising an arched portion (34) at least in a central region (35) that is arched towards the plurality of battery cells (10).

4. The battery unit (100) according to claim 3, wherein the top cover member (30) comprises another straight portion (36') on the outer side formed by inflating the top cover member (30) to elastically press the first metal sheet (31) against the battery cells (10) for the forming of the at least one cooling channel (40), wherein the top cover member (30) in the fixed state prior to the inflating comprises a cross section profile comprising an inclined portion (36) in a peripheral region (37).

5. The battery unit (100) according to one of the claims 1 to 4, wherein the at least one cooling channel (40) is formed to overlap with electrode terminals (12, 14) of the plurality of battery cells (10) and the top cover member (30) is configured to elastically press the first metal sheet (31) against the electrode terminals (12, 14) of the plurality of battery cells (10) by the inflating of the top cover member (30) to form the at least one cooling channel (40).

6. The battery unit (100) according to any of the preceding claims 1 to 5, further comprising a cell vent cover (50) disposed between the top cover member (30) and the plurality of battery cells (10), wherein the at least one cooling channel (40) is formed to overlap with the cell vent cover (50) and the top cover member (30) is configured to elastically press the first metal sheet (31) against at least a portion of the cell vent cover (50) to fix the cell vent cover (50) by the inflating of the top cover member (30) to form the at least one cooling channel (40).

7. The battery unit (100) according to claim 6, wherein the top cover member (30) is configured to elastically press the first metal sheet (31) against an edge portion (52) of the cell vent cover (50).

8. The battery unit (100) according to one of the claims 6 to 7, wherein the electrode terminals (12, 14) and the cell venting cover (50) are spatially separated from each other by the at least one cooling channel (40).

9. The battery unit (100) according to any of the preceding claims 1 to 8, wherein the top cover member (30) comprises a cross section profile with stepped portions (38) between a central region (35) and peripheral regions (37), the central portion (35) being inwardly displaced with respect to the peripheral region (37).

10. The battery unit (100) according to any of the claims 1 to 9, wherein the top cover member (30) comprises a plurality of vent openings (39) arranged to align with respective vent holes (16) of the plurality of battery cells (10).

11. The battery unit (100) according to any of the preceding claims 1 to 10, wherein two opposite side walls (22, 24) of the frame (20) comprise frame coupling edges (28) with a coupling groove (29) that is open toward the bottom member (21) and the cover member (30) comprises cover coupling edges (45) which embrace the frame coupling edges (28), wherein cover coupling protrusions (46) at ends of the cover coupling edges (45) are received in the coupling groove (29).

12. The battery unit (100) according to any of the preceding claims 1 to 11, wherein at the top cover member (30) is coupled to the frame (20) by at least one of bolting, riveting, a snap-fit connection or a force-fit connection.

13. A method of manufacturing a battery unit (100), wherein the method comprises the steps of:
a) providing (S100) a frame (20) which comprises a bottom member (21) and a plurality of side walls (22, 23, 24, 25), wherein the bottom member (22) and the plurality of side walls (22, 23, 24, 25) form an interior accommodation space (26) in which a plurality of battery cells (10) is accommodated;
b) fixing (S200) a top cover member (30) with the frame (20), wherein the top cover member (30) comprises a first metal sheet (31) on an inner side of the top cover member (30) and a second metal sheet (32) on an outer side of the top cover member (30) which are roll-bonded to each other; and
c) inflating (S300), after fixing the top cover member (30) to the frame (20), the top cover member (30) to elastically press the first metal sheet (31) against the plurality of battery cells (10) for forming at least one cooling channel (40) between bonding areas (33) where the first metal sheet (31) and the second metal sheet (32) are roll-bonded.

14. The method of manufacturing according to claim 13, wherein the top cover member (30) fixed with the frame (20) comprises a cross section profile including an arched portion (34) at least in a central region (35) that is arched towards the plurality of battery cells (10) in a state prior to inflating, and
the step of inflating (S300) comprises to straighten the arched portion (34) of the second metal sheet (32) to a straight portion (34') by elastically pressing the first metal sheet (31) against the battery cells (10) to form the at least one cooling channel (40) in the fixed state.

15. A battery system comprising the battery unit (100) according to any one of the preceding claims 1 to 12.

## Amended claims

### Amended claims in accordance with Rule 137(2) EPC.

1. A battery unit (100), comprising:
a plurality of battery cells (10),
a frame (20) comprising a bottom member (21) and a plurality of side walls (22, 23, 24, 25), wherein the bottom member (21) and the plurality of side walls (22, 23, 24, 25) form an interior accommodation space (26) accommodating the plurality of battery cells (10),
a top cover member (30) fixed to the frame (20),
wherein the top cover member (30) comprises a first metal sheet (31) on an inner side of the top cover member (30) and a second metal sheet (32) on an outer side of the top cover member (30) which are roll-bonded to each other,
wherein the top cover member (30) further comprises at least one cooling channel (40) between bonding areas (33) of the first metal sheet (31) and the second metal sheet,
**characterized in that**,
the top cover member (30) is configured to elastically press the first metal sheet (31) against the plurality of battery cells (10) caused by inflating the top cover member (30) in the fixed state to form the at least one cooling channel (40).

2. The battery unit (100) according to claim 1, wherein the battery unit (100) is a battery module (100).

3. The battery unit (100) according to any of the preceding claims 1 to 2, wherein the top cover member (30) comprises a straight portion (34') on the outer side formed by inflating the top cover member (30) to elastically press the first metal sheet (31) against the battery cells (10) for the forming of the at least one cooling channel (40), wherein the top cover member (30) in the fixed state prior to the inflating comprises a cross section profile comprising an arched portion (34) at least in a central region (35) that is arched towards the plurality of battery cells (10).

4. The battery unit (100) according to claim 3, wherein the top cover member (30) comprises another straight portion (36') on the outer side formed by inflating the top cover member (30) to elastically press the first metal sheet (31) against the battery cells (10) for the forming of the at least one cooling channel (40), wherein the top cover member (30) in the fixed state prior to the inflating comprises a cross section profile comprising an inclined portion (36) in a peripheral region (37).

5. The battery unit (100) according to one of the claims 1 to 4, wherein the at least one cooling channel (40) is formed to overlap with electrode terminals (12, 14) of the plurality of battery cells (10) and the top cover member (30) is configured to elastically press the first metal sheet (31) against the electrode terminals (12, 14) of the plurality of battery cells (10) caused by the inflating of the top cover member (30) in the fixed state to form the at least one cooling channel (40).

6. The battery unit (100) according to any of the preceding claims 1 to 5, further comprising a cell vent cover (50) disposed between the top cover member (30) and the plurality of battery cells (10), wherein the at least one cooling channel (40) is formed to overlap with the cell vent cover (50) and the top cover member (30) is configured to elastically press the first metal sheet (31) against at least a portion of the cell vent cover (50) to fix the cell vent cover (50) caused by the inflating of the top cover member (30) in the fixed state to form the at least one cooling channel (40).

7. The battery unit (100) according to claim 6, wherein the top cover member (30) is configured to elastically press the first metal sheet (31) against an edge portion (52) of the cell vent cover (50).

8. The battery unit (100) according to one of the claims 6 to 7, wherein the electrode terminals (12, 14) and the cell venting cover (50) are spatially separated from each other by the at least one cooling channel (40).

9. The battery unit (100) according to any of the preceding claims 1 to 8, wherein the top cover member (30) comprises a cross section profile with stepped portions (38) between a central region (35) and peripheral regions (37), the central portion (35) being inwardly displaced with respect to the peripheral region (37).

10. The battery unit (100) according to any of the claims 1 to 9, wherein the top cover member (30) comprises a plurality of vent openings (39) arranged to align with respective vent holes (16) of the plurality of battery cells (10).

11. The battery unit (100) according to any of the preceding claims 1 to 10, wherein two opposite side walls (22, 24) of the frame (20) comprise frame coupling edges (28) with a coupling groove (29) that is open toward the bottom member (21) and the cover member (30) comprises cover coupling edges (45) which embrace the frame coupling edges (28), wherein cover coupling protrusions (46) at ends of the cover coupling edges (45) are received in the coupling groove (29).

12. The battery unit (100) according to any of the preceding claims 1 to 11, wherein at the top cover member (30) is coupled to the frame (20) by at least one of bolting, riveting, a snap-fit connection or a force-fit connection.

13. A method of manufacturing a battery unit (100), wherein the method comprises the steps of:
a) providing (S100) a frame (20) which comprises a bottom member (21) and a plurality of side walls (22, 23, 24, 25), wherein the bottom member (22) and the plurality of side walls (22, 23, 24, 25) form an interior accommodation space (26) in which a plurality of battery cells (10) is accommodated;
b) fixing (S200) a top cover member (30) with the frame (20), wherein the top cover member (30) comprises a first metal sheet (31) on an inner side of the top cover member (30) and a second metal sheet (32) on an outer side of the top cover member (30) which are roll-bonded to each other; and
**characterized in**,
c) inflating (S300), after fixing the top cover member (30) to the frame (20), the top cover member (30) to elastically press the first metal sheet (31) against the plurality of battery cells (10) for forming at least one cooling channel (40) between bonding areas (33) where the first metal sheet (31) and the second metal sheet (32) are roll-bonded.

14. The method of manufacturing according to claim 13, wherein the top cover member (30) fixed with the frame (20) comprises a cross section profile including an arched portion (34) at least in a central region (35) that is arched towards the plurality of battery cells (10) in a state prior to inflating, and
the step of inflating (S300) comprises to straighten the arched portion (34) of the second metal sheet (32) to a straight portion (34') by elastically pressing the first metal sheet (31) against the battery cells (10) to form the at least one cooling channel (40) in the fixed state.

15. A battery system comprising the battery unit (100) according to any one of the preceding claims 1 to 12.
